# EUROPÄISCHE PATENTSCHRIFT

(11) **EP 0 712 481 B1**
(45) Veröffentlichungstag und Bekanntmachung des Hinweises auf die Patenterteilung: **29.10.1997**
(21) Anmeldenummer: 94926123.4
(22) Anmeldetag: 27.07.1994
(51) Int. Cl.: F26B 15/12, F26B 23/00

(54) **VERFAHREN ZUM TROCKNEN VON PLATTEN UND TROCKNER**
BOARD DRYING PROCESS AND DEVICE
PROCEDE ET DISPOSITIF DE SECHAGE DE PANNEAUX

(30) Priorität: 11.08.1993 DE 4326877
(43) Veröffentlichungstag der Anmeldung: 22.05.1996
(73) Patentinhaber: BABCOCK-BSH AKTIENGESELLSCHAFT vormals Büttner-Schilde-Haas AG, 47829 Krefeld (DE)
(72) Erfinder: BAHNER, Friedrich, D-36199 Rotenburg/Fulda (DE); BRAUN, Manfred, D-36251 Bad-Hersfeld (DE); LANG, Karl-Friedrich, D-36251 Bad-Hersfeld (DE); LEHN, Gerhard, D-36251 Bad-Hersfeld (DE); MAURER, Karl, D-36251 Bad-Hersfeld (DE); SCHMIDT, Manfred, D-36280 Oberaula-Oberode (DE); STEINKUHL, Josef, D-36251 Bad-Hersfeld (DE)
(74) Vertreter: Frese-Göddeke, Beate, Dr.
(86) Internationale Anmeldenummer: EP9402479
(87) Internationale Veröffentlichungsnummer: WO9504908

(56) Entgegenhaltungen:
- DE-A- 2 613 512
- DE-A- 2 941 037
- DE-C- 505 017
- FR-A- 2 311 261
- FR-A- 2 614 092
- US-A- 1 399 276
- US-A- 2 266 489
- US-A- 2 329 581
- KROLL K. & KAST W. 'Trocknen und Trockner in der Produktion' 1989 , SPRINGER VERLAG , BERLIN in der Anmeldung erwähnt Absatz 9.1.2.2.3, Seite 492-494
- ZEMENT-KALK-GIPS, Bd.44, Nr.8, 1991 Seiten 421 - 425 BLOECH ET AL 'Planung, Bau und erste Betriebserfahrungen mit einer Produktionsanlage für Gips-Wandbauplatten' in der Anmeldung erwähnt
- KROLL K. & KAST W. 'Trocknen und Trockner in der Produktion' 1989, SPRINGER VERLAG, BERLIN, Seiten 492-494
- ZEMENT-KALK-GIPS, Bd. 44, Nr. 8, 1991 Seiten 421 - 425 BLOECH ET AL 'Planung, Bau und erste Betriebserfahrungen mit einer Produktionsanlage für Gips-Wandbauplatten'

## Beschreibung

Beim Trocknen von Platten, insbesondere Bauplatten, wie Gipskartonplatten oder Mineralfaserplatten, werden die durch einen Trockner geförderten Platten mit erwärmter Luft in Kontakt gebracht.

Die Zufuhr der Trocknungsluft kann in Form einer Längsbelüftung, einer Querbelüftung oder einer Querbelüftung mit Düsen erfolgen. Bei einer Längsbelüftung wird die Trocknungsluft an einem Ende des Trockners oder, wenn er in mehrere Zonen aufgeteilt ist, an einem Ende einer Zone zugeführt und am entgegengesetzten Ende abgeführt.

Bei einer Querbelüftung wird sie an mehreren Stellen an den Seiten des Trockners zugeführt und an den gegenüberliegenden Seiten abgeführt, wodurch größere Massenströme der Trocknungsluft im Trockner ermöglicht werden. Die größten Massenströme können bei Querbelüftung über Düsen durch die, sogenannten, Düsentrockner geführt werden.

In den meisten Fällen wird ein Umluftverfahren angewandt, bei dem ein großer Teil der Trocknungsluft zirkuliert wird. Diese, auch Umluft genannte, Trocknungsluft wird außerhalb des Trocknerinnenraums erwärmt. Nur ein geringer Teil der Trocknungsluft wird als Abluft nach außen abgeführt und ein der Abluft entsprechender Teil als Zuluft von außen zugeführt.

Zum Erwärmen der Trocknungsluft z.B. durch Brenner, ggf. über Heizregister, wird Brennstoff, d.h. Primärenergie, und zum Zuführen der Luft durch Ventilatoren elektrische Energie, d.h. Sekundärenergie, benötigt. Sowohl die Primärenergie als auch die kostenmäßig dreifach zu bewertende Sekundärenergie sollten möglichst niedrig gehalten werden.

In der DE-Z Zement-Kalk-Gips, Nr. 8, 1991, Seiten 421 bis 425, ist ein Verfahren zum Trocknen von Gipswandbauplatten mit Querbelüftung beschrieben, bei dem durch Nutzung von Kondensationswärme der Abluft ein geringer Verbrauch an Primärenergie erzielt wird. Dazu wird in jeder der beiden Trocknerzonen die Heißluft in einem zwischen Trocknerröhren angeordneten Wärmetauscher durch Vorwärmen der Heißluft abgekühlt. Da die Heißluft, d.h. die den Platten zugeführte Trocknungsluft, nur auf geringe Temperaturen erwärmt wird, wird ein hoher Massenstrom an Trocknungsluft benötigt. Dies führt zu einem verhältnismäßig großen Verbrauch an Sekundärenergie.

Ein weiteres Trocknungsverfahren, bei dem durch Nutzung von Kondensationswärme der Abluft ein geringer Primärenergieverbrauch erzielt wird, ist aus der DE-A 26 13 512 bekannt. Dieses Verfahren ist zweistufig ausgebildet. In der ersten Trocknerstufe wird mit hoher Temperatur und hoher Luftfeuchte und in der zweiten Trocknerstufe mit niedriger Temperatur und niedriger Luftfeuchte getrocknet, wobei die Trocknungsleistung der ersten Stufe doppelt bis dreimal so groß ist wie die der zweiten Stufe und die zweite Trocknerstufe unter Zwischenschaltung eines Wärmetauschers aus der Abluft der ersten Trocknerstufe beheizt wird. In beiden Stufen wird die Trocknungsluft im Umluftverfahren zugeführt, und zwar in der ersten Trocknerstufe in Form einer Längsbelüftung und in der zweiten Trocknerstufe in Form einer Querbelüftung mit einem großen Umluftmassestrom. Der große Umluftmassestrom der zweiten Stufe ist wegen des großen Verbrauchs an Sekundärenergie ein Grund dafür, daß die Anmelderin in der Praxis statt diesem das im folgenden beschriebene Verfahren eingesetzt hat.

Bei dem aus dem Buch "Trocknungstechnik" von K. Kröll und W. Kast, Dritter Band, 1989, Seiten 489 bis 494, bekannten, gattungsgemäßen Trockenverfahren werden Gipskartonplatten, die in Etagen durch den Trockner gefördert werden, ebenfalls zweistufig mit hoher Temperatur jedoch mittlerer Luftfeuchte der Trocknungsluft in der ersten Stufe und mit mittlerer Temperatur und niedriger Luftfeuchte der Trocknungsluft in der zweiten Stufe getrocknet. Im gattungsgemäßen Trockner sind zur Durchführung der ersten Stufe zwei Zonen und zur Durchführung der zweiten Stufe eine Zone vorgesehen. Dies und die höheren Temperaturen der Trocknungsluft in der ersten Stufe lassen auf eine höhere Trocknungsleistung in der ersten Stufe schließen. Durch die im Vergleich zur DE-A 26 13 512 höhere Temperatur der Trocknungsluft in der zweiten Stufe werden extrem hohe Umluftmasseströme vermieden, so daß dieses Verfahren zu einem geringen Verbrauch an Sekundärenergie führt. Der Verbrauch an Primärenergie ist jedoch relativ hoch.

Bei der Reduzierung des Verbrauchs an Primärenergie durch Nutzen auch der Kondensationswärme der Abluft stellt sich das generelle Problem, daß die Abwärme der Abluft nur bei einem niedrigen Temperaturniveau zur Verfügung steht. Eine niedrigere Temperatur der Trocknungsluft kann zwar durch größere Luftmassenströme kompensiert werden; dies führt jedoch, wie bei den bekannten Verfahren beschrieben, zu einem größeren Verbrauch an Sekundärenergie.

Aufgabe der Erfindung ist es daher, ein Verfahren gemäß dem Oberbegriff des Anspruchs 1 und einen Trockner gemäß dem Oberbegriff des Anspruchs 7 mit möglichst geringem Primär-und Sekundärenergieverbrauch zu entwickeln. Insbesondere soll bei der Erfindung die eingesetzte Primärenergie durch Nutzen der Abwärme und auch der Kondensationswärme der Abluft möglichst gering gehalten werden, ohne den Bedarf an Sekundärenergie durch Umwälzen großer Luftmassenströme zu erhöhen.

Diese Aufgabe ist durch die kennzeichnenden Merkmale der Ansprüche 1 und 7 gelöst.

Bei dem Verfahren zum Trocknen von Platten gemäß dem Oberbegriff des Anspruchs 1 wird erfindungsgemäß in der Stufe B
- die Abluft der Stufe A durch einen in den Etagen des Trockners angeordneten Wärmetauscher geleitet und
- die Trocknungsluft mit niedriger Temperatur und niedriger Luftfeuchte im Gegenstrom zur Abluft der Stufe A geführt.

In der Stufe B wird die durch den Wärmetauscher geleitete, stark wasserdampfhaltige Abluft der Stufe A durch die Trocknungsluft niedriger Temperatur so stark abgekühlt, daß ein Teil des Wasserdampfes kondensiert.

Abwärme und Kondensationswärme der Abluft der Stufe A fallen im Innern des Trockners in direkter Umgebung der zu trocknenden Platten an und werden in Form von Strahlungs- und Konvektionswärme auf die Platten übertragen. Heizvorrichtungen außerhalb des Trocknerinnenraumes werden nicht benötigt. Umluftleitungen können vereinfacht oder eingespart werden.

Durch die Nutzung auch der Kondensationswärme, die durch die niedrige Temperatur der den Wärmetauscher abkühlenden Trocknungsluft und die zumindest mittlere Luftfeuchte der Abluft der Stufe A ermöglicht wird, wird die Primärenergie intensiv genutzt.

Bei der Führung der Trocknungsluft im Gegenstrom zur durch den Wärmetauscher geleiteten Abluft der Stufe A trifft kühlere Trocknungsluft auf bereits abgekühlte Abluft. Dies stellt eine möglichst weitgehende Kondensation des in der Abluft enthaltenden Wasserdampfes sicher und verbessert weiter die Nutzung der Primärenergie. Die intensive Nutzung der Primärenergie führt zu einer erheblichen Einsparung an Primärenergie.

Insgesamt wird in der Stufe B höchstens mit der Hälfte der Trocknungsleistung der Stufe A getrocknet. Dabei wird ein Teil der Wärme durch die Anordnung des Wärmetauschers in den Etagen des Trockners durch Wärmestrahlung auf die Platten übertragen. Zur Ubertragung des zweiten Teils der Wärme durch Konvektion wird daher nur eine verhältnismäßig geringe Menge Trocknungsluft benötigt. Die zur Förderung dieser Menge Trocknungsluft benötigte Sekundärenergie ist wesentlich geringer als die, die die angeführten Verfahren mit ähnlich geringem Primärenergieverbrauch wie bei dem erfindungsgemäßen Verfahren benötigen.

Beim erfindungsgemäßen Verfahren wird daher die Primärenergie weitestgehend genutzt, ohne den Bedarf an Sekundärenergie wesentlich zu erhöhen.

Gemäß Anspruch 2 wird in der Stufe A im Umluftverfahren getrocknet, wobei Trocknungsluft einer Temperatur von 150 bis 300°C und einer Luftfeuchte von 0,2 bis 0,8 zugeführt und Trocknungsluft einer Temperatur von 120 bis 200°C und einer Luftfeuchte von 0,2 bis 0,8 abgeführt wird. Ein Teil dieser Trocknungsluft wird als Abluft aus der Stufe A abgezogen und in den Wärmetauscher der Stufe B geleitet. In der Stufe B wird Trocknungsluft in Form einer Längsbelüftung zugeführt, wobei Trocknungsluft einer Temperatur von 20 bis 80°C und einer Luftfeuchte von 0,005 bis 0,015 zugeführt und Trocknungsluft einer Temperatur von 80 bis 110°C und einer Luftfeuchte von 0,03 bis 0,1 abgeführt wird.

Bei der zwei- bis vierfach höheren Trocknungsleistung der Stufe A und den Verfahrensparametern des Anspruchs 2 wird die Primärenergie optimal bei möglichst geringem Sekundärenergieverbrauch genutzt.

Im Vergleich zum gattungsgemäßen Verfahren wird beim erfindungsgemäßen Verfahren der Brennstoff des dort in der dritten Zone eingesetzten Brenners eingespart.

Der beim erfindungsgemäßer Verfahren benötigte Massenstrom ist sogar kleiner als der in der Stufe B, d.h. in der dritten Zone, des gattungsgemäßen Verfahrens. Die Verfahrens-parameter ermöglichen einen so geringen Massestrom der Trocknungsluft in der Stufe B, daß die Trocknungsluft in Form einer einfachen Längsbelüftung zugeführt werden kann, d. h. auf ein Umwälzen der Trocknungsluft und damit Umluftleitungen völlig verzichtet werden kann. Die insgesamt beim erfindungsgemäßen Verfahren benötigte Sekundärenergie ist, berücksichtigt man die zusätzlich aufzuwendende elektrische Energie zur Förderung der Abluft der Stufe A durch den Wärmetauscher, etwa genauso groß wie die des gattungsgemäßen Verfahrens.

Da durch die Wärmetauscherflächen auch der Strömungsquerschnitt im Trocknerinnenraum verringert wird, kann der geringere Massestrom der Trocknungsluft bei etwa gleicher Strömungsgeschwindigkeit wie in der Stufe A an den Platten vorbeigeleitet werden.

Eine weitere Nutzung der Primärenergie ermöglicht gemäß Anspruch 3 eine Vorwärmung der der Stufe B zugeführten Trocknungsluft in einem zweiten Wärmetauscher außerhalb des Trockners, durch den die den Wärmetauscher der Stufe B verlassende Abluft geleitet wird.

Die in der aus der Stufe B abgeführten Trocknungsluft enthaltende Wärme wird gemäß dem Anspruch 4 genutzt, indem die Trocknungsluft den Brennern der Stufe A zugeführt wird.

Das Verfahren nach Anspruch 5 ist besonders zum Trocknen von Gipskartonplatten, die gegen Ende des Trocknungsprozesses wegen der Gefahr der Gipskalzination keinen allzu hohen Temperaturen ausgesetzt werden können, geeignet. Daher werden die Platten nach einer Vortrocknung, zunächst bei hoher Temperatur in der Stufe A und anschließend bei niedriger Temperatur in der Stufe B getrocknet. Dieser Temperaturverlauf begünstigt außderdem die Stärkewanderung, die zu einer guten Haftung des Kartons benötigt wird.

Das Verfahren des Anspruchs 6 ist besonders zum Trocknen von Platten, z.B. Mineralfaserplatten, die auch im trockenen Zustand höheren Temperaturen ausgesetzt werden können, geeignet. Die Platten werden bei diesem Verfahren in der Stufe B vorgetrocknet und in der Stufe A auf Endfeuchte getrocknet. Bei diesem Temperaturverlauf wird mit großen Temperaturdifferenzen von Trocknungsluft und Platten getrocknet, was zu einer besonders effektiven Primärenergienutzung führt.

Ein Trockner gemäß dem Anspruch 7 ist zur Durchführung des Verfahrens nach den Ansprüchen 1 bis 6 geeignet.

Trockner gemäß den Ansprüchen 8 bis 11 sind besonders zur Durchführung der Verfahren nach den Ansprüchen 3 bis 6 geeignet.

Rollenbahntrockner oder Bandtrockner gemäß Anspruch 12, bei denen die Fördervorrichtungen mehrere übereinander angeordnete Rollenbahnen oder Bänder aufweisen, sind besonders gut zum Einbau eines Wärmetauschers, der sich dabei in den Etagen oberhalb der Rollenbahnen oder Bänder erstreckt, geeignet.

Der Wärmetauscher kann gemäß Anspruch 13 parallel zur Fördereinrichtung verlaufende Wärmetauscherrohre oder gemäß Anspruch 15 Wärmetauscherplatten aufweisen. Der Vorteil der Rohre ist eine geringere Verschmutzungsgefahr des Wärmetauschers, wogegen sich Platten leichter montieren lassen.

Bei der Ausstattung des Wärmetauschers mit Rohren, sind diese gemäß Anspruch 14 vorzugsweise durch quer zur Förderrichtung angeordnete Sammler unterbrochen, wobei die Rohre an diese Sammler angeschlossen sind. In den Sammlern kann das Kondensat gesammelt und aus ihnen abgeleitet werden. Die Sammler erleichtern ggf. auch das Reinigen der Rohre, da durch sie Reinigungsvorrichtungen in die Rohre hineingeführt werden können.

Die Erfindung ist anhand eines in der Zeichnung schematisch dargestellten Beispiels weiter erläutert.

In Figur 1 ist das Verfahrensschema des erfindungsgemäßen Beispiels (unten) dem Verfahrensschema eines gattungsgemäßen Beispiels (oben) gegenübergestellt.

Figur 2 zeigt eine Etage des Abschnitts B des erfindungsgemäßen Trockners anhand einer perspektivischen Darstellung.

In Figur 3 ist ein Querschnitt durch den Trockner im Abschnitt B, in Figur 4 eine seitliche Ansicht eines Segmentes und in Figur 5 ein waagerechter Schnitt durch ein Segment des Trockners im Abschnitt B dargestellt.

Ein Trockner ist mit einer Fördervorrichtung zum Fördern von in Etagen angeordneten Platten durch den Trockner versehen. Der Trockner kann als Rollenbahntrockner oder Bandtrockner ausgebildet sein, wobei die Fördervorrichtung mehrere übereinander angeordnete Rollenbahnen oder Transportbänder aufweist.

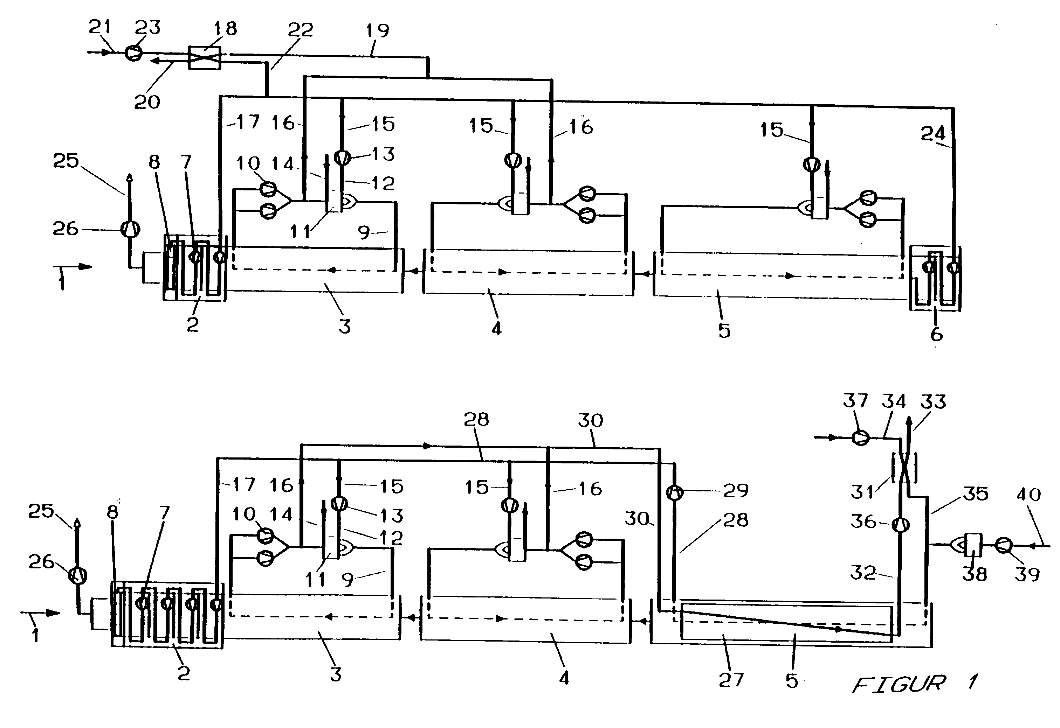

Im folgenden wird mit Hilfe der Verfahrensschemata der Figur 1 zunächst ein gattungsgemäßer und anschließend ein erfindungsgemäßer Trockner zum Trocknen von Gipskartonplatten beschrieben.

Der im oberen Schema der Figur 1 dargestellte, gattungsgemäße Trockner ist in Förderrichtung 1 der Platten in
- einen Vortrocknungsabschnitt 2 mit zwei Düsenbereichen,
- einen Abschnitt A mit zwei im Umluftverfahren längsbelüfteten Zonen 3, 4,
- einen Abschnitt B mit einer im Umluftverfahren längsbelüfteten Zone 5 und
- einen Nachtrocknungsabschnitt 6 mit zwei Düsenbereichen unterteilt.

In den Düsenbereichen des Vor- und des Nachtrocknungsabschnittes 2, 6 weist der Trockner jeweils eine Querbelüftung mit Düsen und einen Ventilator 7 auf. Im Eingangsbereich des Vortrocknungsabschnittes ist außerdem eine Absaugvorrichtung 8 für Trocknungsluft angeordnet.

In den Zonen 3, 4, 5, der Abschnitte A und B weist der Trockner jeweils eine Zufuhrvorrichtung, eine Abfuhrvorrichtung und einen Umluftkanal 9 mit Fördermitteln und mit einer Heizvorrichtung für die Umluft auf.

Die Zufuhr- und Abfuhrvorrichtungen sind jeweils an entgegengesetzten Enden einer Zone 2, 3, 4 angeordnet, wobei in Förderrrichtung 1 der Platten die Zufuhrvorrichtung der ersten Zone 3 am Ende der Zone 3 und die Zufuhrvorrichtungen der zweiten und dritten Zone 4, 5 am Anfang der jeweiligen Zone 4, 5 angeordnet sind.

Im jeweiligen Umluftkanal 9, der die Abfuhrvorrichtung mit der Zufuhrvorrichtung einer Zone 3, 4, 5 verbindet, sind ausgehend von der Abfuhrvorrichtung hintereinander die Fördermittel und die Heizvorrichtung angeordnet. Als Fördermittel für die Umluft sind in jeder Zone zwei parallel geschaltete Ventilatoren 10 vorhanden. Die Heizvorrichtungen weisen jeweils einen Brenner 11 für öl oder Gas, einen Luftanschluß 12 mit einem Ventilator 13 und einen Frischluftanschluß 14 auf. Statt der direkten Beheizung kann auch eine indirekte Beheizung vorgesehen sein, wobei die Heizvorrichtung Heizregister, z. B. mit Thermoöl, aufweist.

Zuluftleitungen 15 für die Zuluft der Zonen 3, 4, 5 sind an den Ventilatoren 13 für die Brenner 11 angeschlossen. Abluftleitungen 16 für die Abluft der ersten und der zweiten Zone 3, 4 zweigen jeweils zwischen den Ventilatoren 10 und den Brennern 11 von den Umluftkanälen 9 ab.

Eine Zuluftleitung 17 ist am Ventilator 7 des zweiten, d. h. letzten, Düsenbereichs des Vortrocknungsabschnittes 2 angeschlossen.

Der Trockner weist außerdem einen außerhalb des Trocknerinnenraumes angeordneten Wärmetauscher 18 mit Zu- und Ableitungen 19, 20 für Abluft und Zu- und Ableitungen 21, 22 für Frischluft auf.

An die Zuleitung 19 für Abluft sind die Abluftleitungen 16 der beiden Zonen 3, 4 angeschlossen. Die Ableitung 20 für Abluft mündet in einem nicht dargestellten Kamin.

In der Zuleitung 21 für Frischluft ist ein Ventilator 23 angeordnet. Die Ableitung 22 für Frischluft verzweigt sich in die Zuluftleitungen 17, 15 des Vortrocknungsabschnittes 2 und der drei Zonen 3, 4, 5 und in eine Zuluftleitung 24, die zum Ventilator 7 des zweiten, d.h. letzten, Düsenbereichs des Nachtrocknungsabschnittes 6 führt.

Eine Abluftleitung 25 mit einem Ventilator 26 führt aus dem Vortrocknungsabschnitt 2 heraus.

Die Zonen 3, 4 des Abschnittes A und die Zone 5 des Abschnitts B des Trockners sind so mit einander verbunden, daß ein Luftaustausch zwischen ihnen möglich ist.

Der erfindungsgemäße, im unteren Schema der Figur 1 dargestellte Trockner ist in
- einen Vortrocknungsabschnitt 2
- einen Abschnitt A mit zwei Zonen 3, 4 und
- einen Abschnitt B mit einer Zone 5 unterteilt.

Im Unterschied zum gattungsgemäßen Trockner weist sein Vortrocknungsabschnitt 2 vier Düsenbereiche auf. Ein Nachtrocknungsabschnitt ist nicht vorgesehen.

Der Aufbau des Vortrocknungsabschnitts 2 und des Abschnitts A mit den beiden Zonen 3, 4 stimmt mit dem des gattungsgemäßen Trockners überein.

Im Abschnitt B, d.h. in der Zone 5, weist der Trockner jedoch
- nur eine Zufuhrvorrichtung und eine Abfuhrvorrichtung für Trocknungsluft, d. h. keinen Umluftkanal, und
- einen Wärmetauscher 27 mit einer Zufuhrvorrichtung und einer Abfuhrvorrichtung auf.

Die Zu- und Abfuhrvorrichtungen des Wärmetauschers 27 und für die Trocknungsluft sind jeweils an entgegengesetzten Enden der Zone 5 angeordnet, wobei in Förderrichtung 1 der Platten die zufuhrvorrichtung des Wärmetauschers 27 und die Abfuhrvorrichtung für Trocknungsluft am Anfang der Zone 5 angeordnet sind.

Die Abfuhrvorrichtung für Trocknungsluft ist mit einer Luftleitung 28, in der ein Ventilator 29 angeordnet ist, und die sich in die Zuluftleitungen 15 für die Zuluft der Zonen 3, 4 des Abschnitts A und die Zuluftleitung 17 des Vortrocknungsabschnitts 2 verzweigt, verbunden.

In die Zufuhrvorrichtung des Wärmetauschers 27 mündet eine Luftleitung 30 für die Abluft des Abschnittes A, an die die Abluftleitungen 16 der ersten und zweiten Zone 3, 4 des Abschnitts A angeschlossen sind.

Der Trockner weist außerdem einen Wärmetauscher 31 zum Vorwärmen der Frischluft, d. h. der dem Abschnitt B zugeführten Trocknungsluft, mit Zu- und Ableitungen 32, 33 für die Abluft und mit Zu- und Ableitungen 34, 35 für die Frischluft auf.

Die Zuleitung 32 für die Abluft ist an der Abfuhrvorrichtung des Wärmetauschers 27 angeschlossen und ist mit einem Ventilator 36 versehen. Die Ableitung 33 für Abluft mündet in einem nicht dargestellten Kamin.

In der Zuleitung 34 für Frischluft ist ein Ventilator 37 angeordnet. Die Ableitung 35 für Frischluft führt zur Zufuhrvorrichtung für die Trocknungsluft des Abschnitts B. In die Ableitung 35 mündet eine mit einem Brenner 38 und einem Ventilator 39 versehene Leitung 40 zum Vorwärmen der Frischluft beim Anfahren des Trockners und zum Regeln der Temperatur der Frischluft.

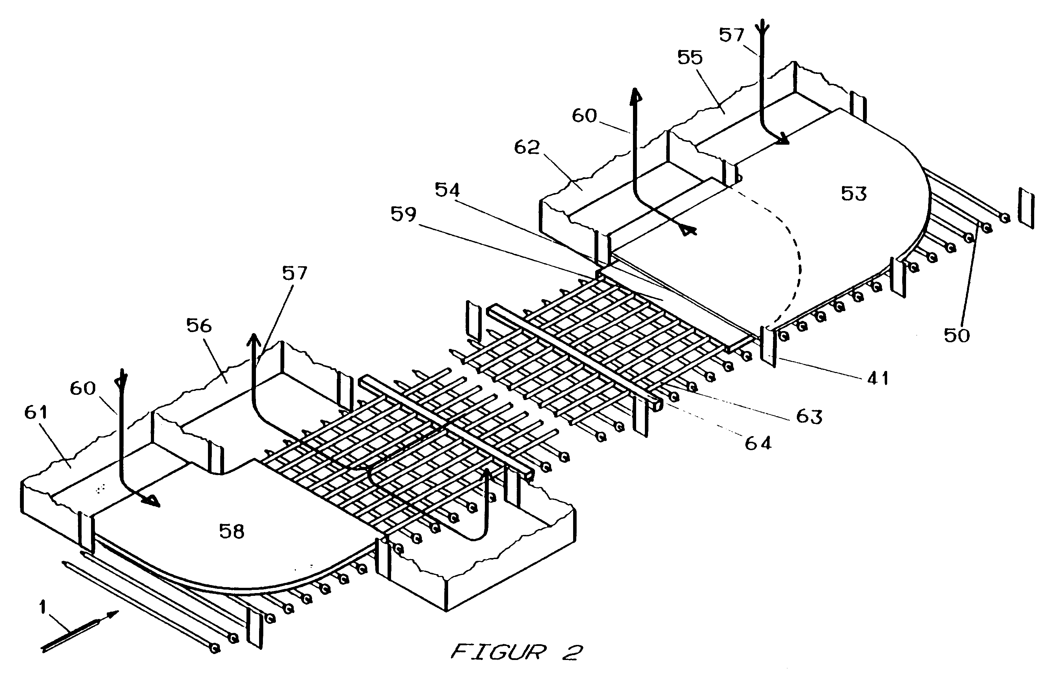

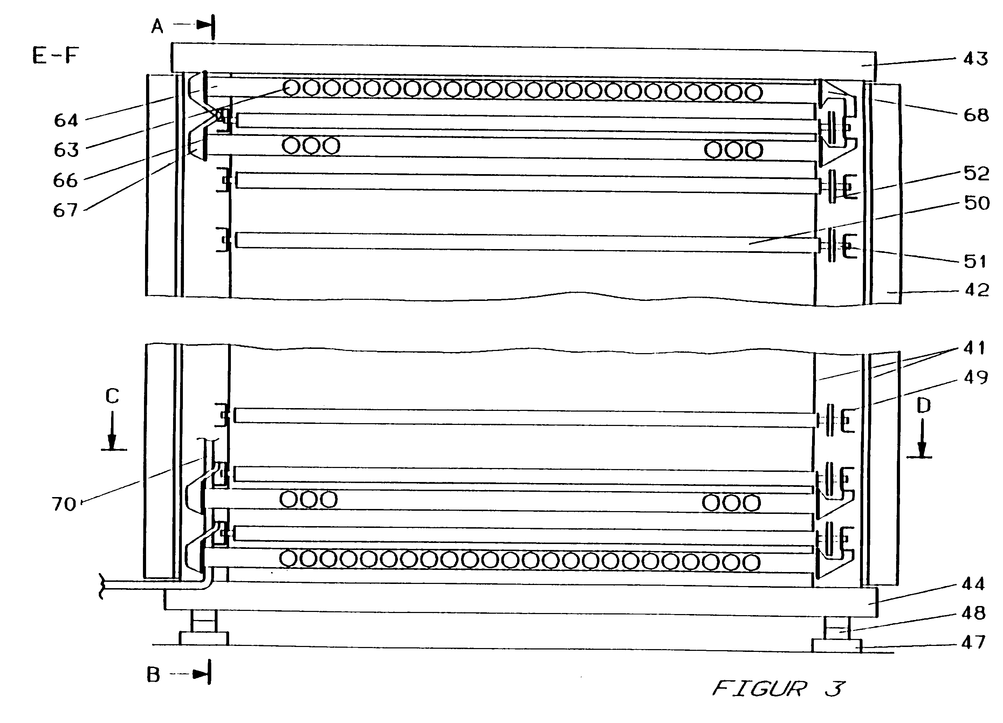

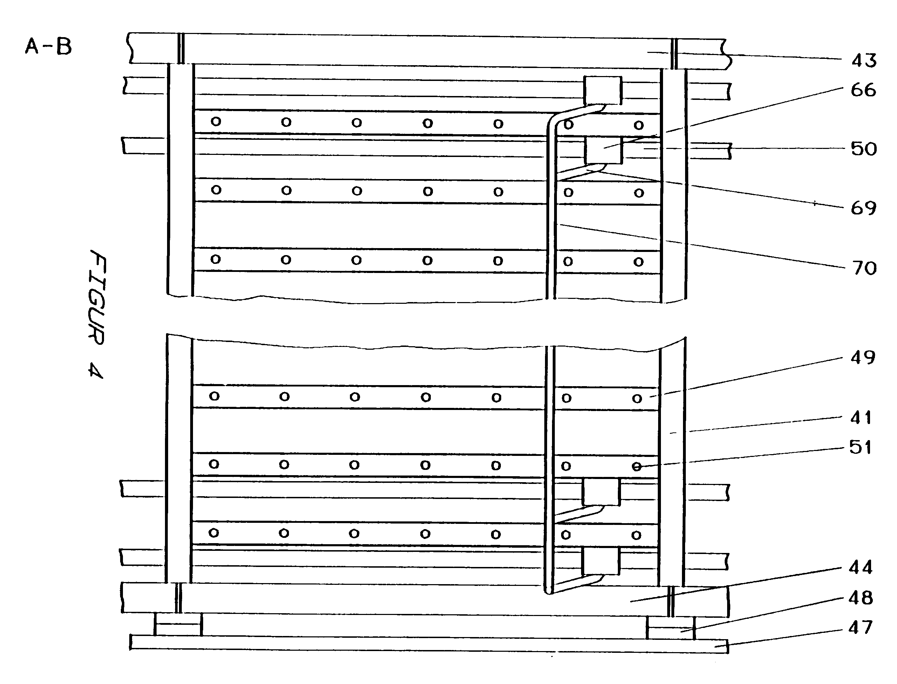

Die Zonen 3, 4, 5 des Trockners sind durch vertikale, auf beiden Seiten angeordnete Stützen 41 in Felder unterteilt (vgl. Figur 2). Die Stützen 41 bestehen beispielsweise aus Doppel-T-Profilen (Figuren 3, 4, 5).

Jedes Feld weist zwei Seitenwände 42, eine Decke 43 und einen Boden 44 auf. Seitenwände 42, Decken 43 und Böden 44 sind doppelwandig ausgeführt und mit Isoliermaterial versehen. Sie sind an den Stützen 41 befestigt, wobei die Seitenwände 42, z. B. an den hinteren Stützen 41 über Scharniere 45 und an den vorderen Stützen 41 über Verschlüsse 46 befestigt sind.

Unterhalb der Stützen 41 sind an den Böden 44 in Tragschienen 47 geführte, mit Rollen versehene Füße 48 angebracht. Auf jeder Seite des Trockners erstrecken sich jeweils zwischen zwei Stützen 41 horizontale, übereinander angeordnete und an den Stützen 41 befestigte Rollenträger 49. Die Rollenträger 49 bestehen z. B. aus U-förmigen Profilen, deren Böden vertikal angeordnet sind und deren Schenkel nach außen gerichtet sind. Zwischen zwei auf beiden Seiten und auf einer Höhe befindlichen Rollenträger 49 erstrecken sich quer zur Förderrichtung 1 horizontale, hintereinander angeordnete, walzenförmige Rollen 50 einer Rollenbahn. Jede der übereinander angeordneten Rollenbahnen bildet den Boden einer der Etagen, in denen die Platten gefördert werden.

Die Rollen 50 sind an ihren Enden mit Zapfen 51 versehen, die in den Rollenträgern 49 gelagert sind. Auf einer Seite (im Beispiel auf der in Förderrrichtung 1 rechten Seite) befinden sich vor den Rollenträgern 49 auf den Zapfen 51 Kettenräder 52. Über diese Kettenräder 52 ist eine (nicht dargestellte) angetriebene Kette geführt. Eine Kette kann sich beispielsweise über die gesamte Förderlänge des Trockners erstrecken und die Rollen 50 zweier übereinanderliegender Etagen antreiben, indem sie in der unteren Etage oberhalb der Rollen 50 über die Kettenräder 52 und in der darüberliegenden Etage unterhalb der Rollen 50 über die Kettenräder 52 geführt ist.

In den ersten und den letzen Feldern der Zonen 3, 4 des Abschnitts A befinden sich außerdem die Zufuhr- oder die Abfuhrvorrichtungen für die Umluft, wobei die Zufuhrvorrichtungen im letzten Feld der ersten Zone 3 und im ersten Feld der zweiten Zone 4 und die Abfuhrvorrichtungen entsprechend im ersten Feld der ersten Zone 3 und im letzten Feld der zweiten Zone 4 angeordnet sind.

In Figur 2 ist die Anordnung der Zufuhr- und Abfuhrvorrichtung für Trocknungsluft sowie die Anordnung des Wärmetauschers 27 in einer Etage dargestellt.

Im Abschnitt B, in der Zone 5, erstreckt sich die Zufuhrvorrichtung für Trocknungsluft über die letzten beiden Felder. Die Abfuhrvorrichtung für Trocknungsluft ist im zweiten Feld angeordnet. Die Zufuhrvorrichtung des Wärmetauschers 27 befindet sich im ersten Feld und seine Abfuhrvorrichtung im zweitletzten Feld der Zone 5.

In jeder Etage weist die Zufuhrvorrichtung für Trocknungsluft im oberen Bereich der Etage eine sich über zwei Felder und über die gesamte Breite der Rollenbahn erstreckende, plattenförmige Düse 53 mit einer seitlichen (nicht sichtbaren) Öffnung für den Eintritt der Trocknungsluft und einer entgegen der Förderrichtung 1 in die Etage weisenden Öffnung 54 für den Austritt der Trocknungsluft auf. Die Düsen 53 sind im Innern mit Leitblechen versehen.

Die Zufuhrvorrichtung für Trocknungsluft weist auf jeder Seite des Trockners einen sich über die Länge des letzten Feldes und die gesamte Höhe des Trockners, d. h. über alle Etagen, erstreckenden Zuluftkanal 55, in den die seitlichen Öffnungen der Düsen 53 münden, auf. Die Abfuhrvorrichtung weist im zweiten Feld des Abschnitts B einen entsprechenden Abluftkanal 56 auf. Die Strömungsrichtung der Trocknungsluft ist mit Pfeilen 57 gekennzeichnet.

Die Zufuhrvorrichtung und die Abfuhrvorrichtung des Wärmetauschers 27 weisen jeweils in jeder Etage eine oberhalb der Rollenbahn angeordnete, plattenförmige Düse 57 und 58 auf. Die Düsen 58 und 59 sind ebenfalls im Innern mit Leitblechen versehen. Jede Düse 58 weist eine seitliche Öffnung zum Eintritt und jede Düse 59 eine seitliche Öffnung zum Austritt der Abluft auf. Die Strömungsrichtung der Abluft ist mit Pfeilen 60 gekennzeichnet. Die seitlichen Öffnungen der Düsen 58, 59 münden ebenfalls jeweils in einen Kanal 61, 62, der sich über die gesamte Länge des entsprechenden Feldes und die gesamte Höhe des Trockners erstreckt.

In jeder Etage ist die Düse 59 der Abfuhrvorrichtung des Wärmetauschers 27 unterhalb der Düse 53 der Zufuhrvorrichtung für Trocknungsluft angeordnet und ragt etwas unter der Düse 53 hervor. Die Düse 58 der Zufuhrvorrichtung ist auf gleicher Höhe wie die Düse 59 der Abfuhrvorrichtung angeordnet. Der Wärmetauscher 27 weist außerdem auf derselben Höhe angeordnete Rohre 63 und Sammler 64 auf.

Die Anordnungen aus einer Düse 58, Rohren 63, Sammler 64 und einer Düse 59 des Wärmetauschers 27 in den Etagen erstrecken sich annähernd über die gesamte Fläche der Rollenbahnen (wobei in Figur 2 nur jede dritte Rolle 63 eingezeichnet ist). Eine solche Anordnung befindet sich auch unterhalb der untersten Rollenbahn. In den Figuren 3 bis 5, die den Innenraum des Trockners im Abschnitt B zeigen, ist der Wärmetauscher 27 nur in den obersten beiden Etagen, in der untersten Etage und unterhalb der untersten Etage dargestellt. Dabei sind in der zweitobersten und in der untersten Etage nur einige Rohre 63 eingezeichnet.

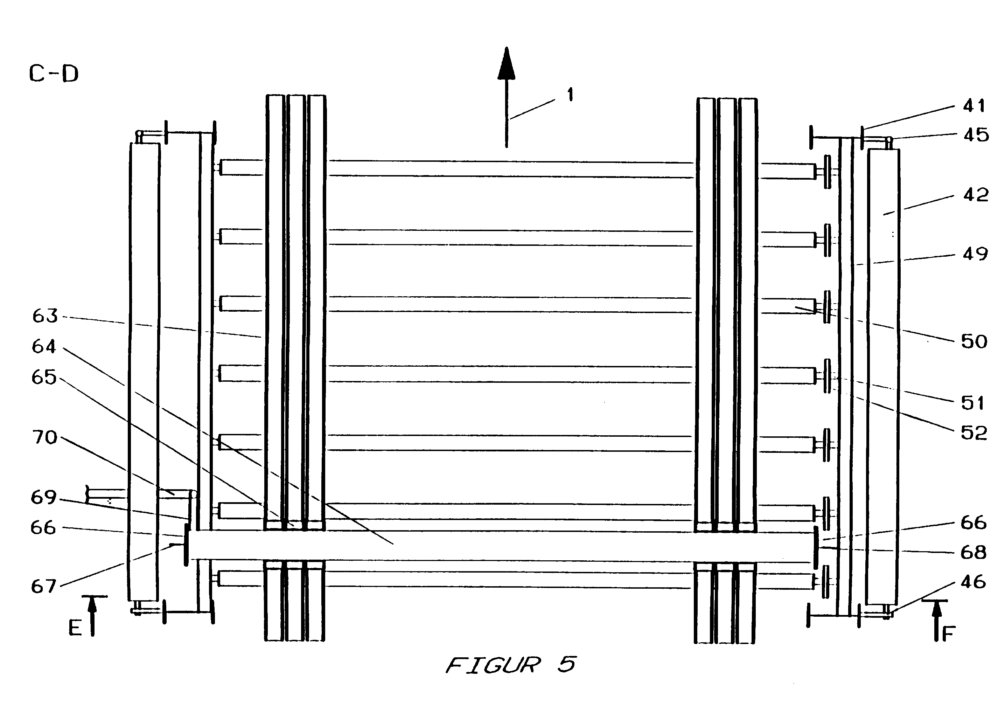

Die Rohre 63 erstrecken sich parallel zur Förderrichtung 1 von der Düse 58 der Zufuhrvorrichtung zur Düse 59 der Abfuhrvorrichtung, an die sie jeweils angeschlossen sind. Die Rohre 63 sind durch die quer zur Förderrichtung 1 angeordneten Sammler 64, an die sie über lösbare (nur in Figur 5 eingezeichnete) Verbindungselemente 65 angeschlossen sind, unterbrochen.

Bis auf Öffnungen für die Rohre 63 sind die Düsen 58 und 59 zum Trocknerinnenraum geschlossen. Die Rohre 63 können zur Vergleichmäßigung der Strahlung auf die Platten an den Sammlern 64 jeweils um einen halben Rohrabstand quer zur Förderrichtung 1 versetzt sein. Sie haben eine glatte Oberfläche und können aus rostfreiem Stahl, Aluminium, verzinkten oder feueraluminiertem Blech bestehen.

Auch die Sammler 64 können aus diesen Materialien hergestellt sein. Sie sind beispielsweise in gleichen Abstand voneinander angeordnet, wobei sich in jedem Feld ein Sammler 64 befindet. Der Abstand der Sammler 64 kann jedoch auch, z. B. je nach Verschmutzungsgrad der Rohre 63, unterschiedlich sein und bis zu zwei bis vier Feldlängen betragen. In diesen Fällen sind die Rohre 63 zwischen den Sammlern 64, z. B. in den Feldern ohne Sammler, durch (nicht dargestellte) Stützen gehalten.

Die z. B. kastenförmigen Sammler 64 mit rechteckigem Querschnitt und abgerundeten Kanten sind mit zwei seitlichen, abschraubbaren Deckeln 66 versehen. Sie sind über an den Deckeln 66 befestigte Halterungen 67, 68 an den Rollenträgern 49 befestigt. Die Halterungen 67, 68 bestehen beispielsweise aus zu den Deckeln 66 hin breiter werdenden Blechen. Sie können auch aus Profilen bestehen.

Über an Böden der Sammler 64 angeschlossene Abflußleitungen 69 sind die Sammler 64 an einem vertikal verlaufenen Abflußrohr 70 angeschlossen. Die Abflußrohre 70 münden, beispielsweise, über ein Siphon, in einen Abflußkanal oder über einen Abflußkanal in eine Wasservorlage mit z. B. 30 mm Wassersäule. In Figur 3 ist das Abflußrohr 70 nur in den unteren Etagen eingezeichnet.

Der Querschnitt der Rohre 63 ist rund. Er kann gegebenenfalls auch zur Vergrößerung der horizontalen Strahlungsfläche oval oder elliptisch sein.

Statt der Rohre 63 kann der Wärmetauscher 27 auch an die Düsen 58, 59 angeschlosse Platten, die z. B. feldweise aneinander gesetzt und unterstützt sind und mit Reinigungsvorrichtungen versehen sind, aufweisen.

Die Breite einer Rollenbahn beträgt etwa drei bis vier Meter, die Länge eines Feldes beispielsweise 2,40 m. In einem Feld sind jeweils etwa fünf bis sieben Rollen 50 hintereinander angeordnet. Die Länge der Zonen 3, 4 des Abschnitts A beträgt jeweils etwa 20 m, die der Zone 5 des Abschnitts B 50 bis 70 m. Der Trockner weist 12 Etagen auf. Die Anzahl der Etagen kann zwischen 8 und 14 variieren.

Erfindungsgemäß werden die Platten im Betrieb in den Etagen über die angetriebenen Rollen 50 der Rollenbahnen kontinuierlich durch den Trockner gefördert. Je nach Größe des Trocknerinnenraumes und der Breite der Platten sind zwei bis vier Platten nebeneinander angeordnet. Dabei werden die Platten hintereinander in einer Stufe A und einer Stufe B mit Trocknungsluft in Kontakt gebracht. In diesem Beispiel zur Trocknung von Gipskartonplatten werden sie vorher in einer Vortrocknungsstufe vorgetrocknet.

Vor dem Trockner beträgt die Feuchte der Platten 45 % (kg Wasser pro kg Trockensubstanz in %) und ihre Temperatur durch das bereits eingesetzte Abbinden des Gipses 40°C.

In der Vortrocknungstufe durchlaufen die Platten die vier Düsenbereiche des Vortrocknungsabschnittes 2. Die Zufuhr der Trocknungsluft erfolgt im Kreuzgegenstrom zur Förderrichtung 1, und zwar in Form hintereinandergeschalteter Querbelüftungen mit Düsen, bei der die Trocknungsluft dem letzten Düsenbereich zugeführt und durch die Absaugvorrichtung 8 am Anfang des ersten Düsenbereichs abgeführt wird. Die aus der Zone 5 des Abschnitts B abgeführte, dem Vortrocknungsabschnitt 2 zugeführte Trocknungsluft hat eine Luftfeuchte von 0,04 bis 0,05 (kg Wasser pro kg trockene Luft) und eine Temperatur von 100°C. Nach Durchlaufen des Vortrocknungsabschnittes 2 beträgt die Feuchte der Platten 42 % und ihre Temperatur 60 bis 70°C.

In der Stufe A durchlaufen die Platten die erste und zweite Zone 3, 4 des Abschnitts A und werden dabei mit Trocknungsluft einer Strömungsgeschwindigkeit von etwa 7 bis 15 m/s in Kontakt gebracht. Die Zufuhr der Trocknungsluft erfolgt in jeder der beiden Zonen 3, 4 in Form einer Längsbelüftung im Umluftverfahren, wobei die Trocknungsluft aus den Umluftkanälen 9 durch die Zufuhrvorrichtungen den Zonen 3, 4 zugeführt und nach Druchströmen der Zonen 3, 4 durch die Abfuhrvorrichtungen in die Umluftkanäle 9, in denen die wieder aufgewärmt wird, abgeführt wird. Die zugeführte Trocknungsluft hat eine mittlere Luftfeuchte von 0,3 bis 0,5 und eine hohe Temperatur von etwa 260 bis 280°C. Die abgeführte Trocknungsluft hat eine etwas höhere Luftfeuchte ebenfalls von 0,3 bis 0,5 und eine Temperatur von z. B. 170°C.

In der ersten Zone 3 des Abschnitts A wird die Trocknungsluft im Gegenstrom zur Förderrichtung 1 der Platten und in seiner zweiten Zone 4 im Gleichstrom zur Förderrichtung 1 geführt. Die der zweiten Zone 4 zugeführte Trocknungsluft kann eine wenig höhere Temperatur und eine wenig niedrigere Luftfeuchte als die der ersten Stufe zugeführten Trocknungsluft aufweisen. Außerdem werden mit Hilfe der Ventilatoren 10, 13 der Stufe A und der Ventilatoren 29, 36 der Stufe B die Druckverhältnisse in den Luftsystemen so eingestellt, daß eine gewisse Menge Trocknungsluft von der Zone 5 des Abschnitts B in die Zone 4 des Abschnitts A und von der Zone 4 des Abschnitts A in die Zone 3 des Abschnitts A strömt.

Im Abschnitt A werden die Platten auf eine Feuchte von 10 bis 12% getrocknet. Ihre Temperatur beträgt weiterhin etwa 100°C.

In der Stufe B durchlaufen die Platten die Zone 5 des Abschnitts B. Die Zufuhr der Trocknungsluft erfolgt in Form einer Längsbelüftung im Gegenstrom zur Förderrichtung 1 der Platten. Außerdem wird in der Stufe B die Abluft der Stufe A durch den in den Etagen der Zone 5 des Trockners angeordneten Wärmetauscher 27 im Gleichstrom mit der Förderrichtung 1 geleitet. Trocknungsluft der Stufe B und Abluft der Stufe A sind dadurch im Gegenstrom zueinander geführt.

Die Abluft der Stufe A wird aus den Umluftkanälen 9 der Zonen 3, 4 zwischen den Ventilatoren 10 und den Brennern 11 abgezogen und über die Leitungen 16 und 30 der Zufuhrvorrichtung des Wärmetauschers 27 zugeführt. Sie wird über die Düsen 58 in die Rohre 63 geleitet, durchströmt die Rohre 63 und die Sammler 64 und wird über die Düsen 59 der Abfuhrvorrichtung des Wärmetauschers 27 abgeführt. Dabei kondensiert ein Teil des in der Abluft enthaltenen Wasserdampfes. Das Kondensat wird in den Sammlern 64 gesammelt und über die Abflußleitungen 69, das Abflußrohr 70 und den Abflußkanal geleitet.

Aus der Abfuhrvorrichtung des Wärmetauschers 27 wird die Abluft über die Ableitung 35 durch den Wärmetauscher 31 zum Kamin geführt. Im Wärmetauscher 31 wird von außen durch den Ventilator 37 angesaugte Frischluft erwärmt und über die Ableitung 35 der Zufuhrvorrichtung für Trocknungsluft zugeführt.

Beim Anfahren des Trockners wird gegebenenfalls durch den Ventilator 39 angesaugte Frischluft im Brenner 38 erwärmt und über die Ableitung 35 der Zufuhrvorrichtung für Trocknungsluft zugeführt. Der Brenner 38 kann auch zur Regelung der Temperatur der der Zufuhrvorrichtung zugeführten Trocknungsluft eingesetzt werden.

Die durch die Düsen 53 der Zufuhrvorrichtung zugeführte Trocknungsluft hat eine üblicher Umgebungsluft entsprechende Luftfeuchte von 0,005 bis 0,015 und eine Temperatur von z. B. 60°C. Bei Durchströmen der Zone 5 des Abschnitts B erhöht sich die Luftfeuchte der Trocknungsluft auf 0,04 bis 0,05 und ihre Temperatur auf etwa 100°C. Diese Trocknungsluft wird durch den Abluftkanal 55 der Abfuhrvorrichtung abgeführt und über die Luftleitunge 28 und die Zuluftleitungen 15 den Brennern 11 der Zonen 3, 4 des Abschnitts A sowie, über die Luftleitung 28 und die Zuluftleitung 17, wie bereits erwähnt, dem Vortrocknungsabschnitt 2 zugeführt.

In der Stufe B wird zur Trocknung der Platten die Wärme sowohl durch die Konvektion als auch durch Strahlung auf die Platten übertragen.

Bei der Wärmeübertragung durch Konvektion werden die Platten mit der Trocknungsluft, die im Wärmetauscher 31 vorgewärmt und durch den Kontakt mit den Wärmetauscherflächen des Wärmetauschers 27 im Innern des Trockners aufgewärmt wird, in Kontakt gebracht. Die Strömungsgeschwindigkeit der Trocknungsluft wird durch einen geringen Massestrom der Trocknungsluft bei geringem Strömungsquerschnitt auf ebenfalls 7 bis 15 m/s eingestellt. Wegen des niedrigen Temperaturniveaus besteht keine Gefahr der Übertrocknung der Platten durch die Wärmestrahlung.

Die Wärmeübertragung durch Strahlung erfolgt über die Wärmetauscherflächen des in den Etagen des Trockners angeordneten Wärmetauschers 27, d. h. über die Düsen 57 der Zufuhrvorrichtung, die Rohre 60, die Sammler 61 und die Düsen 58 der Abfuhrvorrichtung.

Die durch Konvektion und die durch Strahlung auf die Platten übertragenen Wärmemengen sind etwa gleich groß. Die Platten werden dabei auf eine Feuchte von ≤ 0,3 % getrocknet. Ihre Temperatur beträgt bei Verlassen des Abschnitts B 60°C, so daß eine Kühlung oder Abschottung durch Luftzufuhr nicht mehr benötigt wird.

## Patentansprüche

1. Verfahren zum Trocknen von Platten,
die in Etagen durch einen Trockner gefördert werden,
bei dem die Platten in zwei Stufen A und B mit Trocknungsluft in Kontakt gebracht werden,
wobei in der Stufe A
- im Umluftverfahren mit Trocknungsluft hoher Temperatur und zumindest mittlerer Luftfeuchte und
- mit einer zwei bis vierfach höheren Trocknungsleistung als in der Stufe B getrocknet wird,
dadurch gekennzeichnet, daß
in der Stufe B
- die Abluft der Stufe A durch einen in den Etagen des Trockners angeordneten Wärmetauscher (27) geleitet wird und
- die Trocknungsluft mit niedriger Temperatur und niedriger Luftfeuchte im Gegenstrom zur Abluft der Stufe A geführt wird.

2. Verfahren nach Anspruch 1, dadurch gekennzeichnet, daß
in der Stufe A
- Trocknungsluft einer Temperatur von 150 bis 300°C und einer Luftfeuchte von 0,2 bis 0,8 zugeführt,
- Trocknungsluft einer Temperatur von 120 bis 200°C und einer Luftfeuchte von 0,2 bis 0,8 abgeführt wird,
- von der ein Teil als Abluft in die Stufe B geführt wird, und
in der Stufe B
- Trocknungsluft in Form einer Längsbelüftung zugeführt wird, wobei
- die Trocknungsluft mit einer Temperatur von 20 bis 80°C und einer Luftfeuchte von 0,005 bis 0,015 zugeführt und
- Trocknungsluft einer Temperatur von 80 bis 110°C und einer Luftfeuchte von 0,03 bis 0,1 abgeführt wird.

3. Verfahren nach Anspruch 1 oder 2, dadurch gekennzeichnet, daß die den Wärmetauscher (27) verlassende Abluft der Stufe A in einen Wärmetauscher (31) zum Vorwärmen der Trocknungsluft der Stufe B geleitet wird.

4. Verfahren nach einem der Ansprüche 1 bis 3, wobei die als Umluft geführte Trocknungsluft der Stufe A durch mindestens einen Brenner erwärmt wird, dadurch gekennzeichnet, daß die aus der Stufe B abgeführte Trocknungsluft den Brennern (11) zugeführt wird.

5. Verfahren nach einem der Ansprüche 1 bis 4, dadurch gekennzeichnet, daß die Platten
- zunächst in einer Vortrocknungsstufe
- anschließend in der Stufe A und
- schließlich in der Stufe B getrocknet werden.

6. Verfahren nach einem der Ansprüche 1 bis 4, dadurch gekennzeichnet, daß die Platten
- zunächst in der Stufe B und
- anschließend in der Stufe A getrocknet werden.

7. Trockner zum Trocknen von Platten,
mit einer Fördervorrichtung zum Fördern von in Etagen angeordneten Platten durch den Trockner,
mit einem Abschnitt A
- mit mindestens einer Zone (3,4),
- die eine Zufuhrvorrichtung, eine Abfuhrvorrichtung und einen Umluftkanal (9) mit Fördermitteln und einer Heizvorrichtung (11) für Umluft, sowie Mittel (13,15) zum Zuführen von Zuluft und Mittel (10,16) zum Abführen von Abluft aufweist,
mit einem Abschnitt B
- mit einer Zufuhrvorrichtung (35) für Trocknungsluft und einer Abfuhrvorrichtung (28) für Trocknungsluft
- die an entgegengesetzten Enden des Abschnitts B angeordnet sind,
gekennzeichnet durch
einen Wärmetauscher (27)
- der sich in den Etagen oberhalb der Fördervorrichtung durch den Abschnitt B des Trockners erstreckt,
- mit einer Zufuhrvorrichtung (30) und einer Abfuhrvorrichtung (32), die an entgegengesetzten Enden des Abschnitts B angeordnet sind, wobei
- die Zufuhrvorrichtung (30) des Wärmetauschers (27) mit mindestens einem der Mittel (10,16) zum Abführen von Abluft des Abschnitts A verbunden ist und
- die Zufuhrvorrichtung (30) des Wärmetauschers (27) und die Zufuhrvorrichtung (35) für Trocknungsluft der Stufe B an entgegengesetzten Enden des Abschnitts B angeordnet sind.

8. Trockner nach Anspruch 7, gekennzeichnet durch einen Wärmetauscher (31) zum Vorwärmen der Trocknungsluft des Abschnitts B, dessen Zuleitung (34) an die Abfuhrvorrichtung (32) des Wärmetauschers (27) angeschlossen ist.

9. Trockner nach Anspruch 7 oder 8, bei dem die Heizeinrichtungen des Abschnitts A Brenner sind, dadurch gekennzeichnet, daß die Abfuhrvorrichtungen für Trocknungsluft des Abschnitts B mit Zuluftleitungen (15) der Brenner (11) verbunden sind.

10. Trockner nach einem der Ansprüche 7 bis 9, dadurch gekennzeichnet, daß in Förderrichtung (1) der Platten hintereinander ein Vortrocknungsabschnitt (2), der Abschnitt A und der Abschnitt B angeordnet sind.

11. Trockner nach einem der Ansprüche 7 bis 9, dadurch gekennzeichnet, daß in Förderrichtung (1) der Platten der Abschnitt B vor dem Abschnitt A angeordnet ist.

12. Trockner nach einem der Ansprüche 7 bis 11, dadurch gekennzeichnet, daß die Fördervorrichtung Rollenbahnen oder Transportbänder aufweist.

13. Trockner nach einem der Ansprüche 7 bis 12, dadurch gekennzeichnet, daß der Wärmetauscher (27) parallel zur Förderrichtung (1) der Platten verlaufende Rohre (63) aufweist.

14. Trockner nach Anspruch 13, dadurch gekennzeichnet, daß die Rohre (63) durch quer zur Förderrichtung (1) angeordnete Sammler (64), an die sie angeschlossenen sind, unterbrochen sind.

15. Trockner nach einem der Ansprüche 7 bis 12, dadurch gekennzeichnet, daß der Wärmetauscher (27) Platten aufweist.

## Claims

1. A method of drying panels,
which are conveyed in tiers through a drier,
in which the panels are brought into contact with drying air in two stages A and B, wherein in stage A
- drying takes place in the air-circulation process with drying air at a high temperature and with at least an average air moisture, and
- with a drying performance from two to four times higher than in stage B,
**characterized in that**
in stage B
- the waste air of stage A is led through a heat exchanger (27) arranged in the tiers of the drier, and
- the drying air is conveyed at a low temperature and with a low air moisture in counterflow to the waste air of stage A.

2. A method according to Claim 1, **characterized in that**
in stage A
- drying air is supplied at a temperature of from 150 to 300°C and with an air moisture of from 0.2 to 0.8,
- drying air is removed at a temperature of from 120 to 200°C and with an air moisture of from 0.2 to 0.8,
- from which a part is conveyed as waste air into stage B, and
in stage B
- drying air in the form of longitudinal aeration is supplied, wherein
- the drying air is supplied at a temperature of from 20 to 80°C and with an air moisture of from 0.005 to 0.015, and
- drying air is removed at a temperature of from 80 to 110°C and with an air moisture of from 0.03 to 0.1.

3. A method according to Claim 1 or 2, **characterized in that** the waste air of stage A leaving the heat exchanger (27) is fed into a heat exchanger (31) for pre-heating the drying air of stage B.

4. A method according to one of Claims 1 to 3, wherein the drying air from stage A conveyed as circulating air is heated by at least one burner, **characterized in that** the drying air removed from stage B is supplied to the burners (11).

5. A method according to one of Claims 1 to 4, **characterized in that** the panels
- are dried first in a pre-drying stage,
- then in stage A, and
- finally in stage B.

6. A method according to one of Claims 1 to 4, **characterized in that** the panels
- are dried first in stage B, and
- then in stage A.

7. A drier for drying panels,
with a conveying device for conveying panels arranged in tiers through the drier,
with a portion A
- with at least one zone (3, 4),
- which comprises a supply device, a removal device and an air-circulation duct (9) with conveying means and a heating device (11) for circulating air, and means (13, 15) for supplying supply air and means (10, 16) for removing waste air,
with a portion B
- with a supply device (35) for drying air and a removal device (28) for drying air,
- which are arranged at opposite ends of portion B,
**characterized by**
a heat exchanger (27)
- which in the tiers above the conveying device extends through portion B of the drier,
- with a supply device (30) and a removal device (32) which are arranged at opposite ends of portion B, wherein
- the supply device (30) of the heat exchanger (27) is connected to at least one of the means (10, 16) for removing waste air from portion A, and
- the supply device (30) of the heat exchanger (27) and the supply device (35) for drying air of stage B are arranged at opposite ends of portion B.

8. A drier according to Claim 7, **characterized by** a heat exchanger (31) for pre-heating the drying air of portion B, the supply line (34) of which is connected to the removal device (32) of the heat exchanger (27).

9. A drier according to Claim 7 or 8, in which the heating devices of portion A are burners, **characterized in that** the removal devices for the drying air of portion B are connected to supply lines (15) of the burners (11).

10. A drier according to one of Claims 7 to 9, **characterized in that** a pre-drying portion (2), the portion A and the portion B are arranged in the conveying direction (1) of the panels.

11. A drier according to one of Claims 7 to 9, **characterized in that** portion B is arranged upstream of portion A in the conveying direction (1) of the panels.

12. A drier according to one of Claims 7 to 11, **characterized in that** the conveying device has roller paths or conveyor belts.

13. A drier according to one of Claims 7 to 12, **characterized in that** the heat exchanger (27) has tubes (63) extending parralel to the conveying direction (1) of the panels.

14. A drier according to Claim 13, **characterized in that** the tubes (63) are interrupted by collecting means (64) which are arranged transversely to the conveying direction (1) and to which the said tubes (63) are connected.

15. A drier according to one of Claims 7 to 12, **characterized in that** the heat exchanger (27) has plates.

## Revendications

1. Procédé de séchage de plaques qui sont transportées en étages à travers un séchoir, dans lequel les plaques sont mises en contact avec de l'air de séchage dans deux étapes A et B, et dans lequel on sèche *dans l'étape A :*
- dans un procédé de circulation d'air avec de l'air de séchage à température élevée et à humidité d'air au moins assez moyenne et
- avec une puissance de séchage deux à quatre fois supérieure à celle de l'étape B,
caractérisé en ce que *dans l'étape B :*
- l'air à évacuer, de l'étape A, est amené à travers un échangeur de chaleur (27) agencé dans les étages du séchoir et
- l'air de séchage, avec une température faible et une humidité d'air faible est amené, à contre-courant par rapport à l'air à évacuer de l'étape A.

2. Procédé suivant la revendication 1, caractérisé en ce que
*dans l'étape A*
- de l'air de séchage à une température de 150 à 300°C et à une humidité d'air de 0,2 à 0,8 est amené,
- de l'air de séchage à une température de 120 à 200°C et à une humidité d'air de 0,2 à 0,8 est évacué,
- dont une partie est alimentation dans l'étape B en tant qu'air à évacuer, et
dans *l'étape B*
- de l'air de séchage est fourni sous la forme d'une ventilation longitudinale,
- l'air de séchage étant fourni avec une température de 20 à 80°C et une humidité d'air de 0,005 à 0,015 et
- de l'air de séchage à une température de 80 à 110°C et à une humidité d'air de 0,03 à 0,1 étant évacué.

3. Procédé suivant la revendication 1 ou 2, caractérisé en ce que l'air à évacuer, de l'étape A, qui quitte l'échangeur de chaleur (27) est amené dans un échangeur de chaleur (31) pour le préchauffage de l'air de séchage de l'étape B.

4. Procédé suivant l'une des revendications 1 à 3, dans lequel l'air de séchage, de l'étape A, amené comme air de circulation est chauffé par au moins un brûleur, caractérisé en ce que l'air de séchage évacué de l'étape B est fourni au brûleurs (11).

5. Procédé suivant l'une des revendications 1 à 4 caractérisé en ce que les plaques sont séchées
- d'abord dans une étape de séchage préalable,
- ensuite dans l'étape A et
- enfin dans l'étape B.

6. Procédé suivant l'une des revendications de 1 à 4, caractérisé en ce que les plaques sont séchées
- d'abord dans l'étape B et
- ensuite dans l'étape A.

7. Séchoir pour le séchage de plaques, comportant un dispositif de transport pour le transport, à travers le séchoir, de plaques agencées en étages,
*comportant un tronçon A*
- avec au moins une zone (3, 4),
- qui présente un dispositif d'alimentation, un dispositif d'évacuation et un canal de circulation d'air (9) comprenant des moyens de refoulement et un dispositif de chauffage (11) pour l'air à faire circuler, ainsi que des moyens (13, 15) pour amener de l'air amené et des moyens (10, 16) pour évacuer de l'air à évacuer,
*comportant un tronçon B*
- comprenant un dispositif d'alimentation (35) pour de l'air de séchage et un dispositif d'évacuation (28) pour de l'air de séchage,
- qui sont agencés à des extrémités opposées du tronçon B,
caractérisé par un échangeur de chaleur (27)
- qui s'étend dans les étages au-dessus du dispositif de transport, à travers le tronçon B du séchoir,
- comprenant un dispositif d'alimentation (30) et un dispositif d'évacuation (32) qui sont agencés à des extrémités opposées du tronçon B,
- le dispositif d'alimentation (30) de l'échangeur de chaleur (27) étant relié à au moins un des moyens (10, 16) pour l'évacuation d'air à évacuer du tronçon A et
- le dispositif d'alimentation (30) de l'échangeur de chaleur (27) et le dispositif d'alimentation (35) pour de l'air de séchage de l'étape B étant agencés à des extrémités opposées du tronçon B.

8. Séchoir suivant la revendication 7 caractérisé par un échangeur de chaleur (31), pour le préchauffage de l'air de séchage du tronçon B, dont la conduite d'alimentation (34) est raccordée au dispositif d'évacuation (32) de l'échangeur de chaleur (27).

9. Séchoir suivant la revendication 7 ou 8, dans lequel les dispositifs de chauffage du tronçon A sont des brûleurs, caractérisé en ce que les dispositifs d'évacuation pour de l'air de séchage du tronçon B sont reliés à des conduites d'alimentation (15) du brûleur (11).

10. Séchoir suivant l'une des revendications de 7 à 9, caractérisé en ce que, dans le sens du transport (1) des plaques, il est agencé l'un derrière l'autre un tronçon de séchage préalable (2), le tronçon A et le tronçon B.

11. Séchoir suivant l'une des revendications 7 à 9, caractérisé en ce que, dans le sens de transport (1) des plaques, le tronçon B est agencé avant le tronçon A.

12. Séchoir suivant l'une des revendications 7 à 11, caractérisé en ce que le dispositif de transport présente des transporteurs à rouleaux ou des bandes transporteuses.

13. Séchoir suivant l'une des revendications 7 à 12 caractérisé en ce que l'échangeur de chaleur (27) présente des tuyaux s'étendant parallèlement à la direction de transport (1) des plaques.

14. Séchoir suivant la revendication 13, caractérisé en ce que les tuyaux (63) sont interrompus par des collecteurs (64) qui sont agencés transversalement à la direction de transport (1) et auxquels ils sont raccordés.

15. Séchoir suivant l'une des revendications 7 à 12, caractérisé en ce que l'échangeur de chaleur (27) présente des plaques
